Europäisches Patentamt

European Patent Office

Office européen des brevets

(11) Veröffentlichungsnummer: **0 030 276**
**B1**

(12) # EUROPÄISCHE PATENTSCHRIFT

(45) Veröffentlichungstag der Patentschrift: **20.02.85**

(21) Anmeldenummer: **80106836.2**

(22) Anmeldetag: **06.11.80**

(51) Int. Cl.⁴: **H 02 J 7/04, H 02 J 7/10, H 02 M 3/335**

(54) Schaltungsanordnung zum Laden einer Batterie.

(30) Priorität: **08.12.79 DE 2949421**

(43) Veröffentlichungstag der Anmeldung:
**17.06.81 Patentblatt 81/24**

(45) Bekanntmachung des Hinweises auf die
Patenterteilung:
**20.02.85 Patentblatt 85/08**

(84) Benannte Vertragsstaaten:
**AT CH FR GB IT LI NL**

(56) Entgegenhaltungen:
**DE-A-2 457 664**
**US-A-3 435 320**

**ELECTRICAL DESIGN NEWS, Band 15, Nr. 2, 15. Januar 1970, Denver, US, D.A. ZINDER: "Fast-charging systems for Ni-CD batteries", Seiten 65-67**

**Die Akte enthält technische Angaben, die nach dem Eingang der Anmeldung eingereicht wurden und die nicht in dieser Patentschrift enthalten sind.**

(73) Patentinhaber: **Braun Aktiengesellschaft**
**Rüsselsheimer Strasse 22**
**D-6000 Frankfurt/Main (DE)**

(72) Erfinder: **Becker, Klaus**
**Hellmersgarten 7**
**D-6239 Eppstein (DE)**
Erfinder: **Lang, Gerhard**
**Am Stadttor 2**
**D-6395 Weilrod 7 (DE)**
Erfinder: **Pittrof, Kurt**
**Binärstrasse 17**
**D-6238 Hofheim (DE)**
Erfinder: **Schwarz, Gerhard**
**Eggestrasse 16**
**D-5990 Altena (DE)**

(74) Vertreter: **Einsele, Rolf**
**Braun Aktiengesellschaft Postfach 1120**
**Frankfurter Strasse 145**
**D-6242 Kronberg Taunus (DE)**

(56) Entgegenhaltungen:
**ELECTRONICS, Band 51, Nr. 26, 21. Dezember 1978, New York, US, R.J. BOSCHERT: "Flyback converters solid-state solution to low-cost switching power supplies", Seiten 100-104**

## Beschreibung

Die Erfindung bezieht sich auf eine Sperrwandleranordnung zum Laden einer Batterie aus einer elektrischen Energiequelle, die wahlweise aus einer Gleichstromquelle oder einer Wechselstromquelle mit nachgeschlatetem Gleichrichter besteht und parallel zu der die Reihenschaltung der Primärwicklung eines elektromagnetischen Wandlers, die Schaltstrecke eines ersten Transistors und ein Widerstand geschaltet sind, mit einem zweiten Transistor, dessen einer Hauptanschluß mit dem Steueranschluß des ersten Transistors verbunden ist und dessen Steueranschluß sowohl mit einer dem durch die Primärwicklung des elektromagnetischen Wandlers fließenden Strom als auch mit einer der Eingangsspannung proportionalen Steuergröße beaufschlagt ist, wobei der elektromagnetische Wandler eine Sekundärwicklung aufweist, die einerseits über einen Gleichrichter an die aufzuladende Batterie und andererseits über die Reihenschaltung eines Widerstandes mit einem Kondensator an den Steueranschluß des ersten Transistors angeschlossen ist.

Aus der Literaturstelle "VALVO—Technische Informationen für die Industrie", Nr. 770415 (Steuer- und Regelschaltung TDA 1060 für Schaltnetzteile), insbesondere Bild 15, bekannt, bei der nach dem Prinzip der primärseitigen Regelung eines Sperr- oder Durchlaßwandlers der Regelschaltung sowohl ein der Primärspannung proportionaler Wert über eine dritte Wicklung und einen Gleichrichter sowie einen Kondensator als auch der über die Schaltstrecke eines Schalttransistors und einen Emitterwiderstand fließende Primärstrom zugeführt wird. Die Regelschaltung steuer unter Berücksichtigung der Primärspannung und des Primärstromes eine Treiberschaltung an, die aus einem zweiten Transistor besteht, dessen Schaltstrecke die Basis des Schalttransistors ansteuert. In Abhängigkeit vom Schaltverhalten der Regelschaltung wird der in Reihe zur Primärwicklung eines elektromagnetischen Übertragers angeordnete Schalttransistor ein- und ausgeschaltet, so daß die auf die Sekundärseite übertragene Energie vom Schaltverhalten des Schalttransistors abhängig ist. Der Wickelsinn des elektromagnetischen Übertragers hängt davon ab, ob ein Durchfluß- oder Sperrwandler vorgesehen ist, so daß die Energie über die Sekundärwicklung des Übertragers entweder in der Durchlaßphase oder der Sperrphase des Schalttransistors an den Verbraucher abgegeben wird. Diese bekannte Schaltungsanordnung ermöglicht es, daß transportfähige elektrische oder elektronische Geräte an verschiedenen Netzspannungen betrieben werden können oder, falls sie Akkumulatoren aufweisen, daß diese Akkumulatoren an verschiedene Netzspannungen, die sowohl zwischen 110 V und 240 V als auch zwischen 50 Hz und 60 Hz variieren können, aufladbar sind.

Aus der Literaturstelle "Electronics", Band 51, Nr. 26, 21.12.1978, Seiten 100 bis 104, ist ein Sperrwandler zur Konstant-Spannungsversorgung von integrierten Schaltkreisen bzw. Mikrocomputern bekannt, der als Netzgerät zur geregelten Speisung eines Verbrauchers dient, der wahlweise an einer Wechselspannung von 110 V oder 220 V zu betreiben ist. Bei dieser bekannten Sperrwandleranordnung ist in Reihe zur Primärwicklung eines Übertragers die Schaltstrecke eines steuerbaren Halbleiterschalters und eines Emitterwiderstandes geschaltet, während ein zweiter Halbleiterschalter kollektorseitig mit der Basis des ersten Halbleiterschalters verbunden und mit seiner Basis an den Emitterwiderstand angeschlossen ist. Über eine Wicklung, eine Diode und einen Phototransistor, der Teil eines Optokopplers ist, wird die Basis des zweiten Halbleiterschalters zusätzlich mit einem der Eingangsspannung proportionalen Steuersignal beaufschlagt. Bei dieser bekannten Sperrwandleranordnung ist somit die Primärwicklung des Übertragers über einen steuerbaren, durch positive Rückkopplung einschaltbaren, ersten Halbleiterschalter und einen Widerstand mit der Eingangsspannungsquelle verbunden und speist über die Sekundärwicklung den angeschlossenen Verbraucher. Der erste Halbleiterschalter ist mit einem steuerbaren zweiten Halbeleiterschalter verbunden, an dessen Steuerelektrode die an dem Widerstand abfallende Spannung anliegt und der die Ausschaltung des ersten Halbleiterschalters und damit dessen Einschaltdauer in Abhängigkeit von dem durch die Primärwicklung und über den Widerstand fließenden Strom durchführt.

Eine Sperrwandleranordnung zum Laden einer Batterie der eingangs genannten Art gehört gemäß Artikel 54(3) EPÜ ebenfalls zum Stand der Technik durch die EP—A1—0030026. Dabei wird ein Sperrwandler mit Hilfe der beiden steuerbaren Halbleiterschalter in Abhängigkeit von dem durch die Primärwicklung des Übertragers fließenden Strom und in Abhängigkeit von der anliegenden Eingangsspannung so gesteuert, daß die dem Verbraucher zugeführte Leistung konstant ist. Zu dem Zweck ist die Steuerelektrode des mit seiner Schaltstrecke in Reihe zur Primärwicklung des Übertragungs geschalteten Schalttransistors über die Reihenschaltung eines Widerstandes und eines Kondensators mit dem einen Wicklungsende der Sekundärwicklung des Übertragers verbunden.

Bei den bekannten Sperrwandleranordnungen besteht jedoch die Gefahr von Fehlansteuerungen des mit seiner Schaltstrecke in Reihe zur Primärwicklung des Übertragers geschalteten Schalttransistors, insbesondere beim Sperren des Transistors, dan in diesem Falle ein schneller, steiler Anstieg der Kollektorspannung des Transistors erfolgt, der infolge der kapazitiven Rückwirkung des Transistors selbst zu einer erneuten Basisansteuerung führen kann. Dieser Vorgang wird ergänzend unterstützt durch die stets vorhandenen Schaltkreiskapazitäten. Eine weitere Gefahr des Durchschaltens bei gesperrter Steuerelektrode besteht infolge der durch die Streninduktivitäten bedingten Rückschlagspannung bei der Unterbrechung des Stromflusses durch die Primärwicklung, wobei diese Rückschlagspannung auf ein Vielfaches der Netzspannung ansteigen kann und somit zu einer Gefährdung des Transistors führt.

Aufgabe der vorliegenden Erfindung ist es, eine Sperrwandleranordnung der eingangs genannten Art zum Laden einer Batterie aus einer elektrischen Energiequelle zu schaffen, bei der das Schaltverhalten des in Reihe zur Primärwicklung des Übertragers geschalteten Schalttransistors nur von dem an seiner Steuerelektrode anliegenden, von der Regelschaltung über die Treiberschaltung abgegebenen Steuersignal abhängt.

Diese Aufgabe wird erfindungsgemäß dadurch gelöst, daß parallel zur Reihenschaltung des Widerstandes mit dem Kondensator ein weiterer Kondensator geschaltet ist.

Die erfindungsgemäße Lösung stellt sicher, daß das Schaltverhalten des Schalttransistors nur von dem an seiner Steuerelektrode anliegenden, von der Regelschaltung über die Treiberschaltung abgegebenen Steuersignal abhängt.

Eine vorteilhafte Ausgestaltung der erfindungsgemäßen Lösung ist dadurch gekennzeichnet, daß parallel zur Primärwicklung des elektromagnetischen Wandlers die Reihenschaltung aus einer zweiten Diode und eines zweiten Widerstandes mit anodenseitiger Verbindung der zweiten Diode mit dem zweiten Widerstand geschaltet ist.

Diese Ausgestaltung der erfindungsgemäßen Lösung stellt im Zusammenwirken mit der Stabilisierung der Spannung der Steuerelektrode des Schalttransistors einen zuverlässigen Schutz für den Schalttransistor vor Beschädigung und vor einem unerwünschten Wiedereinschalten sicher, indem verhindert wird, daß die beim Abschalten des Schalttransistors auftretende Rückschlagspannung auf den Schalttransistor gelangt.

Anhand eines in der Zeichnung dargestellten Ausführungsbeispiels soll der der Erfindung zugrundeliegende Gedanke näher erläutert werden. Es zeigen:

Fig. 1 einen durch die EP—A1—30026 nach Artikel 54(3) zum Stand der Technik gehörenden selbstschwingenden Sperrwandler;

Fig. 2a und 2b zeitliche Verläufe von Spannung und Strom an einer Wicklung des Übertragers des Sperrwandlers gemäß Fig. 1 in Abhängigkeit von der Versorgungsspannung sowie dem Verlauf des Ladestroms;

Fig. 3 den Verlauf des Ausgangsstroms des Sperrwandlers gemäß Fig. 1 als Funktion der Netzspannung;

Fig. 4 eine Sperrwandleranordnung, bei der das ordnungsgemäße Schaltverhalten des Schalttransistors durch eine definierte Basisspannung sichergestellt ist.

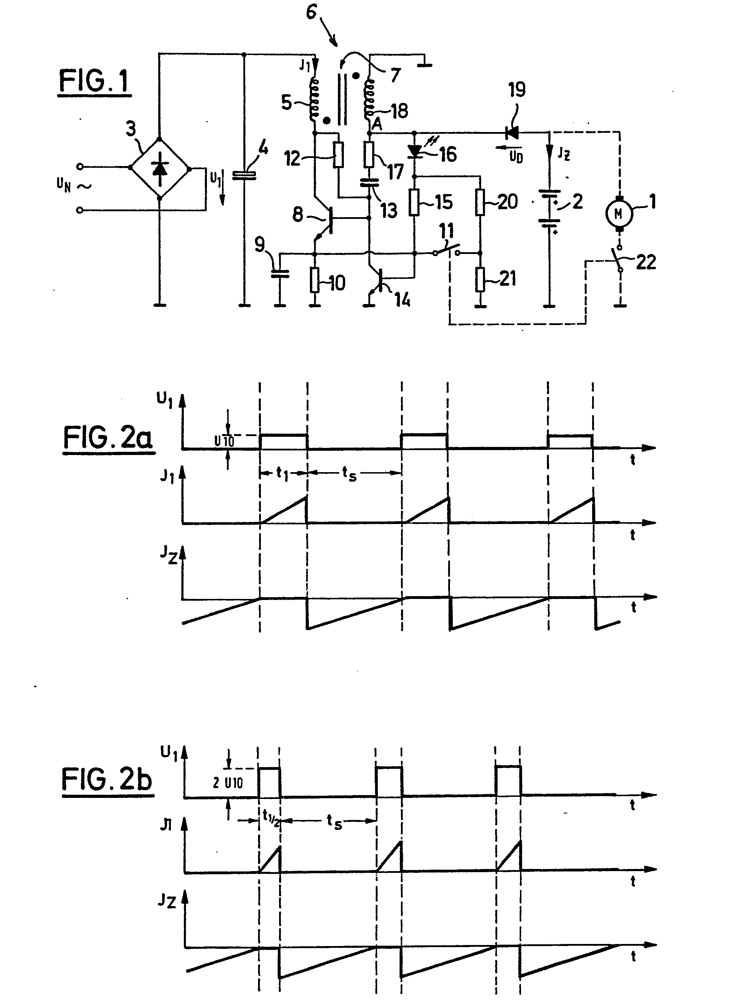

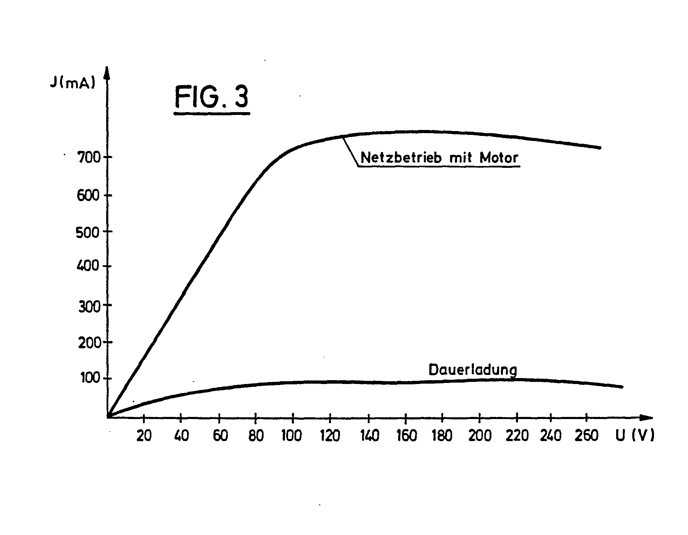

In der Fig. 1 ist eine Schaltungsanordnung gezeigt, die einen Elektromotor 1 aufweist, der wahlweise aus einer Batterie 2 oder von der Netzwechselspannung $U_N$ gespeist werden kann. Die Netzwechselspannung liegt an einem Gleichrichter 3, dem ein Ladekondensator 4 parallelgeschaltet ist. Mit diesem Ladekondensator 4 ist ein Anschluß der Primärwicklung 5 eines elektromagnetischen Wandlers 6, der einen Ferritkern 7 aufweist, verbunden. Der andere Anschluß der Primärwicklung 5 liegt an dem Kollektor eines Schalttransistors 8, dessen Emitter an einer Parallelschaltung aus Kondensator 9 und Widerstand 10 sowie an einem Schalter 11 liegt. Die Basis des schalttransistors 8 ist über einen Widerstand 12 mit dem zweiten Anschluß der Primärwicklung 5, mit einem Kondensator 13 und mit dem Kollektor eines weiteren Transistors 14 verbunden. Während der Emitter des Transistors 14 an Masse liegt, ist seine Basis mit dem Schalter 11 und, über einen Widerstand 15, mit der Kathode einer lichtemittierenden diode 16 verbunden, die mit ihrer Anode an einen Widerstand 17 angeschlossen ist, der an dem Kondensator 13 liegt. Die Anode der Diode 16 ist ferner mit einem Anschluß der Sekundärwicklung 18 des elektromagnetischen Wandlers 6 verbunden, deren anderer Anschluß an Masse liegt. Außerdem liegt die Anode der Diode 16 an der Kathode einer weiteren Diode 19, deren Anode an einem Anschluß des Motors 1 beziehungsweise dem Minuspol der Batterie liegt. Von der Kathode der Diode 16 ist über Widerstände 20, 21 eine Verbindung mit Massepotential vorgesehen, wobei die Verbindungsleitung zwischen den beiden Widerständen 20, 21 an den Schalter 11 angeschlossen ist. Ein weiterer Schalter 22, mit dem der Motor 1 an Massepotential gelegt werden kann, ist ebenfalls vorgesehen. Im folgenden wird die Wirkungsweise der in Fig. 1 dargestellten Schaltungsanordnung beschrieben, wobei auch auf die Figuren 2a, 2b, 3 Bezug genommen wird.

Die Netzwechselspannung $U_N$ wird durch den Gleichrichter 3, der eine Graetz-Brücke sein kann, gleichgerichtet und durch den Ladekondensator 4 geglättet. Man erhält dann an dem Ladekondensator 4 eine Spannung, die dem $\sqrt{2}$-fachen Wert der Effektivwechselspannung entspricht. Geht man davon aus, daß die Schaltungsanordnung in Ruhe ist und die beiden Transistoren 8 und 14 sperren und legt man eine Gleichspannung an die Reihenschaltung aus Primärwicklung 5, Schalttransistor 8 und Widerstand 10, so kann über den Widerstand 12 ein Strom auf die Basis des Schalttransistors 8 fließen. Es genügen bereits einige Mikro-Ampere Basisstrom, um in dem Schalttransistor 8 eine Durchschaltetendenz hervorzurufen. Dies bewirkt einen geringen Strom durch die Primärwicklung 5 des elektromagnetischen Wandlers 6, wodurch eine Änderung des magnetischen Flusses des Wandlers 6 hervorgerufen wird. Im Punkt A der Sekundärwicklung 18 wird hierauf eine positive elektrische Spannung induziert, die über den Widerstand 17 und den Kondensator 13 auf die Basis des Schalttransistors 8 gegeben wird. Aufgrund dieser Spannung wird ein Basisstrom hervorgerufen, der im wesentlichen durch den Widerstand 17 begrenzt wird. Durch diese Art der Mitkopplung ergibt sich ein lawinenartig ansteigender Einschalteffekt im Schalttransistor 8, so daß dieser praktisch mit einem mechanischen Schalter vergleichbar ist. Mit dem Einschalten des Schalttransistors 8 steigt der Strom in der Primärwicklung 5 des Wandlers 6 an, bis an dem Widerstand 10 eine dem Strom proportionale Spannung, beispielsweise von ungefähr 100 Millivolt, anliegt. Diese Spannung ruft in dem Transistor 14 einen Basisstrom hervor, wodurch der Transistor 14 durchschaltet und die Basis des Schalttransistors 8 auf Masse- oder Nullpotential zieht. Dies bewirkt, daß der Schalttransistor 8 weniger gut durchschaltet und der Strom durch die Primärwicklung 5 verringert wird. Hierdurch tritt eine negative Flußänderung im Ferritkern 7 auf, die eine Umpolung der Spannung im Punkt A zur Folge hat. Die nunmehr negative Spannung gelangt über den Widerstand 17 und dem Kondensator 13 auf die Basis des Schalttransistors 8 und begünstigt dessen Abschaltvorgang. Das schnelle Abschalten des Schalttransistors 8 wird ferner durch den Kondensator 9 unterstützt, der die Spannung am Emitter des Schalttransistors 8 kurzzeitig hält, wodurch die Basis-Emitter-Spannung im Abschaltmoment des Schalttransistors 8 negativ ist.

Während der Sperrphase des Schalttransistors 8 fließt die im Ferritkern vorhandene magnetische Energie als Strom aus der Sekundärwicklung 18 ab. Dabei wird die Diode 19 leitend, und die Batterie 2, die beispielsweise aus Nickel-Cadmium-Batterien besteht, erhält einen linear abfallenden Ladestrom. Ein negativer, abfallender Strom über den Widerstand 17 und den Kondensator 13 hält den Schalttransistor 8 gesperrt, bis die im Kern 7 gespeicherte magnetische Energie abgeflossen ist. Erst danach kann wieder ein Anlaßstrom über den Widerstand 12 in die Basis des Schalttransistors 8 fließen, der den bereits beschriebenen Durchschaltevorgang auslöst. Mit Hilfe des elektromagnetischen Wandlers 6 und der Transistoren 8 und 14 läßt sich ein Sperrwandler realisieren, dessen Sperrphase von der Spannung der Zellen der Batterie 2 abhängt, wobei diese Spannung, von der Wandlerseite aus gesehen, nahezu konstant ist.

In diese Zellen kann nur dann ein Strom fließen, wenn die Beziehung

$$\left| N \cdot \frac{d\Phi}{dt} + U_D \right| > |U_{NC}|$$

erfüllt ist.

Dabei bedeuten:

$N$=Anzahl der Windungen der Sekundärwicklung 18;

$\dfrac{d\Phi}{dt}$=zeitliche Änderung des Magnetflusses;

$U_D$=an der Diode 19 abfallende Spannung;
$U_{NC}$=Spannung der Batterie 2.

Ist zu Beginn jeder Sperrphase der Energieinhalt im Kern 7 stets gleich, so ergibt sich ein im zeitlichen Mittel konstanter Stromfluß in die Batterie 2. Ist die Batterie 2 jedoch stark entladen oder teilweise kurzgeschlossen, so verlängert sich die Sperrphase entsprechend. Dadurch ergibt sich eine automatische Strombegrenzung im Störungsfall.

Mit der bisher beschriebenen Schaltungsanordnung wird erreicht, daß der Kern 7 im Abschaltmoment stets den gleichen Energieinhalt aufweist. Wie bereits beschrieben, bedeutet dies bei konstanter Spannung der Batterie 2 gleiche Sperrdauer $t_s$ (Fig. 2a) des Schalttransistors 8 oder pro Sperrzyklus einen gleichen Ladestromverlauf $I_Z$ ($t_s$) an der Batterie 2.

Der Anstieg des Stroms $I_1$ in der Primärwicklung 5 ist dem Betrag der angelegten Spannung $U_N$ beziehungsweise $U_1$ proportional. Da die Abschaltung des Schalttransistors 8 in Abhängigkeit von seinem Emitterstrom—und damit in guter Näherung von Strom $I_1$ durch die Primärwicklung 5—erfolgt, stellt sich die Schaltung zwangsweise auf Änderungen der Versorgungsspannung $U_1$ ein. Die Einschaltzeit $t_1$ des Schalttransistors 8 wird demnach mit der Verdoppelung der Spannung $U_1$ halbiert. Dies hat eine Erhöhung der Schaltfrequenz und damit eine Vergrößerung des effektiven Ladestroms $I_Z$ der Batterie 2 zur Folge. Die Fig. 2a stellt den Fall dar, bei dem $U_1$ einen ersten Betrag $U_{10}$ hat, während in der Fig. 2b der Fall dargestellt ist, bei dem $U_1$ den doppelten Betrag hat wie in der Fig. 2a, nämlich $2\,U_{10}$. Wie man aus den Figuren 2a, 2b erkennt, wird hierbei die Einschaltzeit $t_1$ halbiert. Die durch den elektromagnetischen Wandler 6 transformierte Spannung im Punkt A ist der Eingangsspannung $U_1$ proportional.

Bei steigender Eingangsspannung wird damit der Basisstrom am Schalttransistor 8 erhöht. Der Transistor 14 muß dann einen größeren Strom ziehen, um das Basispotential an dem Schalttransistor 8 zum Zwecke der Abschaltung zu neutralisieren. Die Folge ist, daß sich auch durch diesen Effekt der zeitliche Mittelwert des Ladestroms $I_Z$ mit der Versorgungsspannung $U_1$ ändert. Würde ein Thyristor anstelle des Transistors 14 verwendet, so könnte diese Wirkung vermindert, wenn auch nicht beseitigt werden.

Beide Eigenschaften der Schaltung— Änderung des mittleren Ladestroms durch Frequenzänderung und Verschiebung der Stromschwelle in Abhängigkeit von der Versorgungsspannung—können durch Maßnahmen beseitigt werden, die im folgenden näher beschrieben sind.

Dem über die Primärwicklung 5, den Schalttransistor 8 und den Widerstand 10 fließenden Strom wird am Widerstand 10 ein Strom überlagert, der der Versorgungsspannung $U_1$ direkt proportional ist.

Dadurch wird der Abschaltzeitpunkt des Schalttransistors 8 durch den Transistor 14 in Abhängigkeit von der Versorgungsspannung $U_1$ zeitlich verlegt. Der Punkt A weist während der Zeit des Strom- und Spannungsanstiegs an dem Widerstand 10 ein Potential auf, das der Versorgungsspannung $U_1$ proportional ist. Die Verbindung des Punktes A über die Diode 16 und den Widerstand 15 mit dem Widerstand 10 ermöglicht ene besonders verlustarme Erfassung der Versorgungsspannung $U_1$. Im Widerstand 10 fließt ein der Versorgungsspannung proportionaler Stromanteil und ein dem jeweiligen Emitterstrom des Schalttransistors 8 proportionaler Stromanteil. Der letztgenannte Stromanteil löst den Abschaltvorgang aus. Durch die Addition der beiden Ströme im Widerstand 10 läßt sich bei entsprechender Dimensionierung der Widerstandsverhältnisse der Widerstände 15 und 10 ein in weiten Bereichen von der Versorgungsspannung $U_1$ unabhängiger Ladestrom $I_z$ an der Batterie 2 einstellen. Der Betrag dieses Stroms $I_z$ läßt sich z.B. durch Schließen des Schalters 11, wodurch die Widerstände 20, 21 angekoppelt werden, erhöhen.

Die Leuchtdiode 16 trennt die Widerstände 15 und 20 während des Sperrbetriebs von Punkt A ab. Diese Diode 16 sowie das aus den Widerständen 20, 21, 15, 10 bestehende Additionsnetzwerk sind nur während der Einschaltphase des Schalttransistors 8 stromführend. Da die Einschaltdauer annähernd umgekehrt proportional dem Betrag der Versorgungsspannung $U_1$ ist, erfolgt automatisch eine Regelung der Helligkeit der Leuchtdiode 16.

Das hier beschriebene Ausführungsbeispiel kann dazu verwendet werden, einen Gleichstrommotor für einen Elektrorasierapparat oder dergleichen zu betreiben. Sind die beiden Schalter 11, 22 geöffnet, so arbeitet die Schaltung im Dauerladebetrieb. Dabei steht der Motor 1 still, und es fließt ein Dauerladestrom in die Batterie 2. Außerdem leuchtet die Leuchtdiode 16 auf. Sind die beiden Schalter 11, 22 geschlossen, so wird der vom Wandler 6 abgegebene Strom etwa verzehnfacht, der Motor 1 läuft, ohne die Batterie 2, die jetzt nur als Spannungsstabilisator wirkt, zu entladen. Außerdem leuchtet die Leuchtdiode 16 auf. Die Regelcharakteristik einer praktisch realisierten Schaltungsanordnung ist in der Fig. 3 dargestellt.

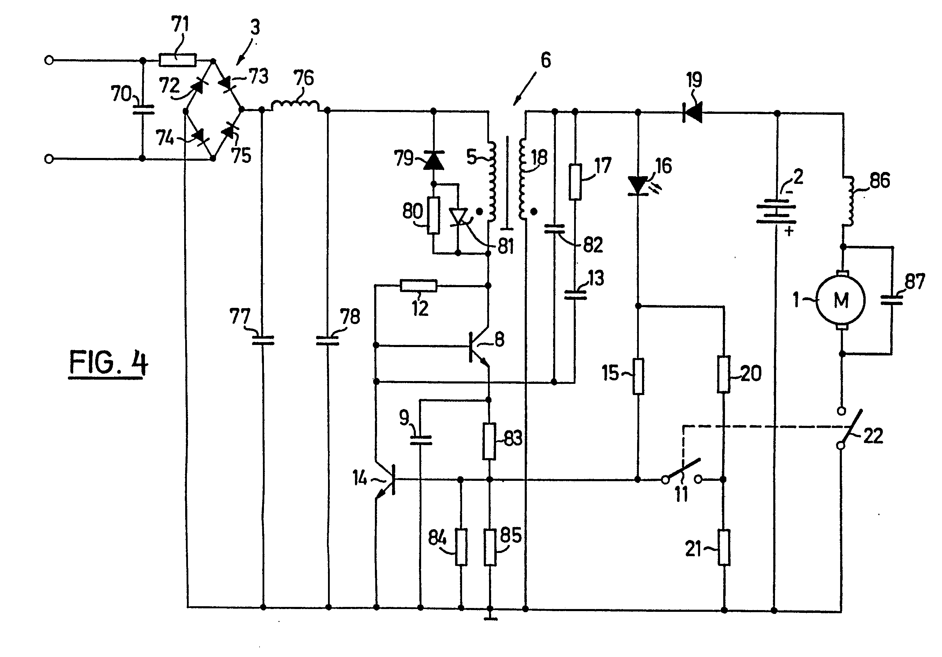

Die in der Fig. 4 dargestellten Elemente, welche den Elementen der Fig. 1 entsprechen, sind mit denselben Bezugszahlen versehen. Im Gleichrichter-Eingangskreis sind die verschiedenen Diode 72, 73, 74, 75 des Gleichrichters 3 sowie die Brummverhinderungs- und Strombegrenzungselemente 70, 71, 77, 78; 76 im Detail dargestellt. Diese Elemente sind bei Gleichrichter-Schaltungen allgemein bekannt. Desgleichen sind die an sich bekannten Beschaltungen 86, 87 des Gleichstrommotors 1 gezeigt.

Wesentlich im Vergleich zur Anordnung der Fig. 1 ist, daß der Emitter des Transistors 8 über einen Widerstand 83 und zwei parallelgeschaltete Widerstände 84, 85 an Masse liegt, wobei die Reihenschaltung der Widerstände 83; 84/85 parallel zu dem Kondensator 9 liegt. Von besonderer Bedeutung ist außerdem, daß parallel zur Primärwicklung 5 des elektromagnetischen Wandlers 6 eine Anordnung vorgesehen ist, die aus einer Diode 79 und einem mit dieser Diode 79 in Reihe geschalteten Widerstand 80 besteht, wobei der Widerstand 80 mittels einer Zenerdiode 81 überbrückt ist. Die Zenerdiode 81 ist dabei mit ihrer Anode mit der Anode der Diode 79 verbunden.

Ferner ist parallel zu der Reihenschaltung aus Widerstand 17 und Kondensator 13 ein Kondensator 81 geschaltet.

Die Schaltungsanordnung, welche parallel zur Primärwicklung 5 angeordnet ist, hat im wesentlichen die Aufgabe, die Spitzen des Spannungs-Rückschaltimpulses zu beseitigen, der sich aufgrund der Streuinduktivität bildet. Dagegen sorgt der Kondensator 82 für eine definierte Basisspannung für den Schalttransistor 8.

## Patentansprüche

1. Sperrwandleranordnung zum Laden einer Batterie (2) aus einer elektrischen Energiequelle, die wahlweise aus einer Gleichstromquelle oder einer Wechselstromquelle mit nachgeschaltetem Gleichrichter (3) besteht und parallel zu der die Reihenschaltung der Primärwicklung (5) eines elektromagnetischen Wandlers, die Schaltstrecke eines ersten Transistors (8) und ein Widerstand (84, 85) geschaltet sind, mit einem zweiten Transistor (14), dessen einer Hauptanschluß mit dem Steueranschluß des ersten Transistors (8) verbunden ist und dessen Steueranschluß sowohl mit einer dem durch die Primärwicklung des elektromagnetischen Wandlers fließenden Strom als auch mit einer der Eingangsspannung proportionalen Steuergröße beaufschlagt ist, wobei der elektromagnetische Wandler eine Sekundärwicklungs (18) aufweist, die einerseits über einen Gleichrichter (19) an die aufzuladende Batterie und andererseits über die Reihenschaltung eines Widerstandes (17) mit einem Kondensator (13) an den Steueranschluß des ersten Transistors (8) angeschlossen ist, dadurch gekennzeichnet, daß parallel zur Reihenschaltung des Widerstandes (17) mit dem Kondensator (13) ein weiterer Kondensator (82) geschaltet ist.

2. Sperrwandleranordnung nach Anspruch 1, dadurch gekennzeichnet, daß parallel zur Primärwicklung (5) des elektromagnetischen Wandlers (6) die Reihenschaltung aus einer zweiten Diode (79) und eines zweiten Widerstandes (80) mit anodenseitiger Verbindung der zweiten Diode (79) mit dem zweiten Widerstand (80) geschaltet ist.

3. Sperrwandleranordnung nach Anspruch 2, dadurch gekennzeichnet, daß parallel zum zweiten Widerstand (80) eine Zenerdiode (81) geschaltet ist, deren Anoden mit der Anode der zweiten Diode (79) verbunden ist.

## Revendications

1. Agencement de transducteur de blocage pour la charge d'une batterie (2) constitué d'une source d'énergie électrique, qui peut être au choix une source de courant redressé ou une source de courant alternatif avec redresseur (3) monté en aval et parallèlement à laquelle sont montés le circuit de série du bobinage primaire (5) d'un transducteur électromagnétique, le circuit conducteur d'un premier transistor (8) et d'une résistance (84, 85), comportant un deuxième transistor (14) dont une borne principale est reliée à la borne de grille du premier transistor (8) et dont la borne de grille est influencée aussi bien, d'une part, par le courant qui s'écoule à travers le bobinage primaire du transducteur électromagnétique que d'autre part par une des valeurs de commande proportionnelle à la tension d'entrée, étant précisé que le transducteur électromagnétique comporte un bobinage secondaire (18) relié d'une part, par l'intermédiaire d'un redresseur (19) à la batterie à charger et d'autre part, par l'intermédiaire du circuit de série constitué d'une résistance (17) et d'un condensateur (13), à la borne de grille du premier transistor (8), caractérisé en ce qu'un autre condensateur (82) est monté parallèlement au circuit de série constitué de la résistance (17) et du condensateur (13).

2. Agencement de transducteur de blocage selon la revendication 1, caractérisé en ce qu'en parallèle au bobinage primaire (5) du transducteur électromagnétique (6) est monté le circuit de série constitué d'une deuxième diode (79) et d'une deuxième résistance (80) avec liaison côté anode, de la deuxième diode (79) avec la deuxième résistance (80).

3. Agencement de transducteur de blocage selon la revendication 2, caractérisé en ce qu'en parallèle à la deuxième résistance (80) est montée une diode Zener (81) dont les anodes sont reliées à l'anode de la deuxième diode (79).

## Claims

1. Blocking transducer arrangement for charging a battery (2) from an electrical energy source, which can be either a direct current or an alternating current source with series-connected rectifiers (3) and parallel to which are connected the series connection of the primary winding (5) of an electromagnetic transducer, the switching section of a first transistor (8) and a resistor (84, 85), with a second transistor (14), whereof a main connection is connected to the control connection of the first transistor (8) and whereof the control connection is subject to the action of both a current flowing through the primary winding of the electromagnetic transducer and a control quantity proportional to the input voltage, the electromagnetic transducer having a secondary winding (18), which is on the one hand connected across a rectifier (19) to the battery to be charged and on the other hand across the series connection of a resistor (17) with a capacitor (13) to the control connection of the first transistor (8), characterized in that a further capacitor (82) is connected in parallel to the series connection of resistor (17) and capacitor (13).

2. Blocking transducer arrangement according to claim 1, characterized in that parallel to the primary winding (5) of electromagnetic transducer (6) is connected the series connection of a second diode (79) and a second resistor (80), with anode-side connection of the second diode (79) to the second resistor (80).

3. Blocking transducer arrangement according to claim 2, characterized in that a Zener diode (81) is connected in parallel to the second resistor (80) and its anodes are connected to the anode of the second diode (79).

FIG.1

FIG.2a

FIG.2b

0 030 276

1

# FIG. 3

J(mA)

- Netzbetrieb mit Motor
- Dauerladung

700 — 600 — 500 — 400 — 300 — 200 — 100

20  40  60  80  100  120  140  160  180  200  220  240  260   U (V)

FIG. 4